# FASCICULE DE BREVET EUROPEEN

(11) **EP 3 693 083 B1**
(45) Date de publication et mention de la délivrance du brevet: **07.08.2024**
(21) Numéro de dépôt: 20154575.3
(22) Date de dépôt: 30.01.2020
(51) Int. Cl.: B01J 4/00, B01J 8/00, B01J 8/12, B01J 19/24, B01J 19/26

(54) **PROCEDE METTANT EN OEUVRE UNE ENCEINTE COMPRENANT UN FOND DE SECTION DECROISSANTE ET D'ANGLE D'INCLINAISON VARIABLE AVEC DES INJECTIONS LATERALES DE LIQUIDE POUR LIMITER L'ENCRASSEMENT**
VERFAHREN MIT VERWENDUNG EINES GEHÄUSES, DAS EINEN BODEN MIT ABNEHMENDEM QUERSCHNITT UND VARIABLEM NEIGUNGSWINKEL MIT LATERALEN FLÜSSIGKEITSEINSPRITZUNGEN ZUR BEGRENZUNG DER VERSCHMUTZUNG UMFASST
PROCESS EMPLOYING UNE ENCLOSURE COMPRISING A DECREASING BOTTOM SECTION AND AN ANGLE OF VARIABLE TILT WITH LATERAL INJECTIONS OF LIQUID TO LIMIT CLOGGING

(30) Priorité: 06.02.2019 FR 1901170
(43) Date de publication de la demande: 12.08.2020
(73) Titulaire: IFP Energies nouvelles, 92852 Rueil-Malmaison Cedex (FR)
(72) Inventeur: AMBLARD, Benjamin, 92852 RUEIL-MALMAISON CEDEX (FR); MARQUES, JOAO, 92852 RUEIL-MALMAISON CEDEX (FR); LE COZ, Jean-François, 92500 RUEIL-MALMAISON (FR)
(74) Mandataire: IFP Energies nouvelles

(56) Documents cités:
- WO-A1-2018/122717
- US-A- 3 846 079
- US-A- 4 146 359
- US-A- 6 010 620
- US-A1- 2006 047 160

## Description

### Domaine technique

La présente invention concerne le domaine de la réduction des dépôts de sédiments ou de molécules instables ou insolubles dans des enceintes à fond de section décroissante et d'angle d'inclinaison variable, typiquement à fond bombé, tel que des réacteurs, des enceintes de séparation et de distillation, des malaxeurs, des mélangeurs, des décanteurs, utilisés dans des procédés produisant des liquides susceptibles d'encrasser lesdites enceintes. L'invention s'applique ainsi aux procédés produisant ou traitant des liquides susceptibles d'encrasser les enceintes, et en particulier, sans être exhaustif, aux procédés comme la viscoréduction, l'hydrocraquage en lit bouillonnant, le craquage catalytique, la cokéfaction retardée en raffinage de produits pétroliers ainsi que les procédés de liquéfaction de charbon et de traitement de biomasse. Par exemple, la présente invention s'applique avantageusement aux enceintes de séparation et de distillation mises en oeuvre en aval des unités de raffinage traitant des produits lourds ou encrassants.

### Technique antérieure

La réduction des dépôts encrassant les enceintes de certains équipements est une problématique majeure dans les unités de traitement ou conversion des charges hydrocarbonées, notamment pour les charges lourdes. En effet, l'encrassement des enceintes impose l'arrêt de l'unité et son démontage pour effectuer le nettoyage. Dans les unités de conversion de charges hydrocarbonées en lit bouillonnant, notamment, l'encrassement des parois et du fond des enceintes d'équipements de séparation peut être dû à des particules de nature asphalténique qui floculent pour former des dépôts solides, des molécules qui s'adsorbent à la paroi, des particules de coke, des fines de catalyseurs, des sulfures métalliques à base de nickel, fer et/ou vanadium ou plus généralement tout solide contenu dans la charge hydrocarbonée traitée. US 2006/047160 1 divulgue un réacteur pour l'oxydation catalytique des hydrocarbures aromatiques avec une enceinte comportant un fond comprenant une partie supérieure cylindrique, une partie inférieure à section décroissante et d'angle d'inclinaison a variable par rapport à l'axe de révolution de ladite partie supérieure cylindrique, et une conduite de sortie, injections de liquide recyclé ou d'appoint dans ladite partie inférieure; une injection de liquide recyclé dans ladite partie supérieure cylindrique.

La demande de brevet US4534851A décrit une méthode d'introduction d'une charge liquide hydrocarbonée dans une conduite de transfert vers une zone réactionnelle, comprenant une injection de vapeur et de la charge hydrocarbonée en écoulement ascendant avec des flux concentriques séparés, le flux de charge hydrocarbonée étant le flux interne et le flux de vapeur étant le flux circonférentiel, et la direction d'une partie de la vapeur vers la paroi interne de ladite conduite de transfert, tandis que le reste de la vapeur et de la charge hydrocarbonée sont évacués de la zone dans une direction parallèle à l'axe longitudinal.

Cependant cette demande ne décrit pas de dispositif permettant la réduction des zones stagnantes par le recyclage du liquide hydrocarboné ou un appoint de liquide externe à la fois à l'intérieur de la partie tronconique et/ou à l'intérieur de la partie cylindrique de l'enceinte.

La demanderesse a déposé la demande de brevet français n° 17/59.606. Cette demande porte sur un dispositif pour l'écoulement descendant d'un liquide hydrocarboné contenant des particules solides comprenant des injections latérales de liquides pour limiter les phénomènes de dépôts solides dans des équipements à fond tronconique.

### Objectifs et Résumé de l'invention

La présente invention concerne un procédé de conversion de charges hydrocarbonées mettant en oeuvre une enceinte pour l'écoulement descendant d'un liquide hydrocarboné contenant des particules solides, comportant :
- un fond comprenant une partie supérieure cylindrique de diamètre D1, une partie inférieure à section décroissante et d'angle d'inclinaison α variable par rapport à l'axe de révolution (Z) de ladite partie supérieure cylindrique, l'angle α n'étant pas constant sur toute la hauteur de la partie inférieure, excluant une partie inférieure conique ou tronconique, et une conduite de sortie de diamètre D2 par laquelle le liquide hydrocarboné sort et comportant une ouverture positionnée dans le fond de ladite partie inférieure,
   la partie inférieure étant une portion bombée, de préférence de section elliptique, s'étendant sur toute la hauteur de ladite partie inférieure, ladite portion bombée étant de hauteur L1 et ayant un rapport L1/D1 compris entre 0,01 et 20, ou
   ladite partie inférieure est formée par une seule portion bombée comportant ladite conduite de sortie et surmontée par une seule portion tronconique, ou
   ladite partie inférieure est formée par une seule portion bombée comportant ladite conduite de sortie et surmontée par une succession de portions tronconique, ou
   ladite partie inférieure est une succession de portions tronconiques,
- au moins une injection de liquide recyclé et/ou d'appoint dans ladite partie inférieure à section décroissante et d'angle d'inclinaison variable ;
- au moins une injection de liquide recyclé et/ou d'appoint dans ladite partie supérieure cylindrique; la ou lesdites injections situées dans ladite partie inférieure étant inclinées par rapport à la tangente à la paroi de la partie inférieure au point d'injection d'un angle β1 dans le plan vertical (xz) et d'un angle β2 dans le plan horizontal (xy) ; la ou lesdites injections situées dans ladite partie supérieure cylindrique étant inclinées par rapport à la paroi de la partie supérieure cylindrique d'un angle θ1 dans le plan vertical (xz) et d'un angle θ2 dans le plan horizontal (xy), les angles β1 et θ1 étant compris entre 5° et 175°, les angles β2 et θ2 étant compris entre 0° et 180°, et dans lequel la vitesse du liquide V injecté dans lesdites injections est comprise entre 0,05 m.s⁻¹ et 40 m.s⁻¹.

La partie inférieure à section décroissante et d'angle d'inclinaison variable peut être une portion bombée de hauteur L1 avec un rapport L1/D1 compris entre 0,02 et 10 et plus préférentiellement compris entre 0,1 et 5.

Selon un mode de réalisation, la partie inférieure à section décroissante et d'angle d'inclinaison variable est formée par une seule portion bombée comportant la conduite de sortie et surmontée par une seule portion tronconique, et le rapport D1/D3 peut être compris entre 0,05 et 0,9, D3 étant le plus petit diamètre de ladite portion tronconique surmontant ladite portion bombée, et le rapport L3/D3 peut être compris entre 0,01 et 10, L3 étant la hauteur de ladite portion bombée.

Avantageusement, la portion bombée comporte un insert plein formant une surface interne tronconique d'angle d'inclinaison α', de préférence compris entre 5° et 85°, l'insert intégrant au moins en partie les injections situées dans la portion bombée de la partie inférieure.

Selon un autre mode de réalisation, la partie inférieure à section décroissante et d'angle d'inclinaison variable est une succession de portions tronconiques, chacune desdites parties successives ayant de préférence un angle d'inclinaison α croissant en direction de la conduite de sortie.

De préférence, le centre de la conduite de sortie est situé à une distance L4 par rapport à la paroi de la partie supérieure cylindrique, L4 étant comprise entre D2/2 et D1/2, et de préférence égale à D 1/2.

Avantageusement, l'enceinte du procédé selon l'invention comprend une conduite de recyclage d'une partie du liquide sortant de ladite conduite de sortie, ladite conduite de recyclage alimentant en liquide recyclé au moins une des injections.

L'enceinte du procédé selon l'invention peut comprendre une conduite d'appoint pour alimenter en liquide d'appoint au moins une des injections.

Les injections peuvent être réparties par couches horizontales dans la partie inférieure et par couches horizontales dans la partie supérieure cylindrique respectivement.

Avantageusement, le rapport D1/D2 est compris entre 1,1 et 1000, de préférence entre 2 et 500 et de manière plus préférée entre 3 et 100.

Avantageusement, le diamètre D1 est compris entre 0,1 m et 30 m, de préférence entre 0,5 m et 20 m, et de manière très préférée entre 1 m et 10 m.

De préférence, les angles β1 et θ1 sont compris entre 10° et 150°, de manière très préférée entre 15° et 120°, de manière plus préférée entre 15° et 90°et de manière encore plus préférée entre 20° et 60°.

De préférence, les angles β2 et θ2 sont compris entre 0° et 90°, et de préférence sont égaux à 0°.

Avantageusement, la hauteur H entre deux couches horizontales est comprise entre 0,01 m et 10 m, de préférence entre 0,05 m et 5 m et de manière très préférée entre 0,1 m et 1 m.

Avantageusement, le nombre d'injections N par couche est compris entre 1 et 30, de préférence compris entre 2 et 10, et plus préférentiellement compris entre 2 et 6.

Les injections au sein d'une même couche peuvent être espacées d'un angle δ égal à 360/N.

De préférence, l'enceinte est celle d'un moyen de séparation gaz/liquide configuré pour le traitement des charges hydrocarbonées.

De préférence, ledit procédé met en oeuvre une étape d'hydroconversion en lit bouillonnant pour des charges contenant des fractions d'hydrocarbures dont au moins 50 % poids ont une température d'ébullition supérieure à 300°C.

La vitesse du liquide V injecté dans lesdites injections peut être comprise de préférence entre 0,1 m.s⁻¹ et 30 m.s⁻¹ et de manière très préférée entre 0,5 m.s⁻¹ et 10 m.s⁻¹.

Le taux d'injection de liquide recyclé et/ou d'appoint par rapport au liquide hydrocarboné circulant dans l'enceinte est avantageusement compris entre 1 % et 400 %, de préférence entre 5 % et 100 %, de manière très préférée entre 10 % et 60 % et de manière encore plus préférée entre 20 % et 50 %.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

### Liste des figures

[Fig 1]

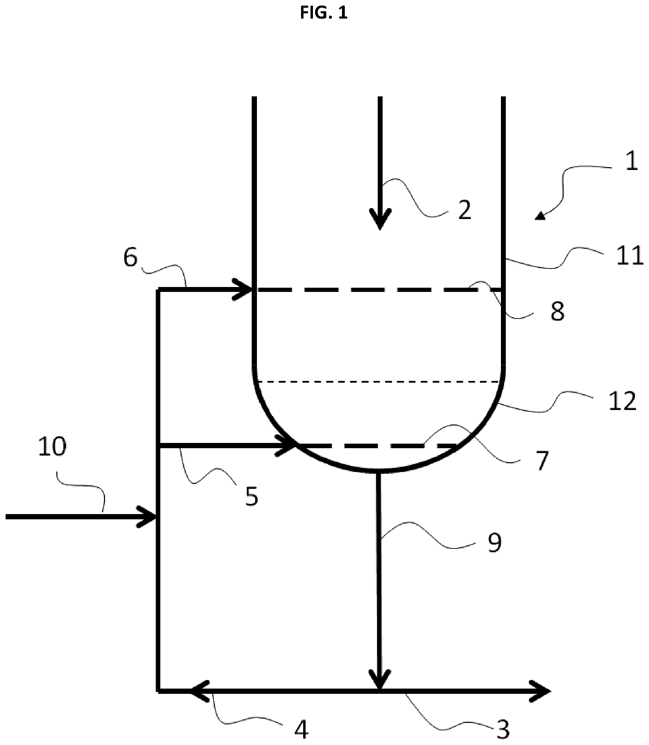

   La figure 1 représente le schéma de principe des injections dans l'enceinte 1 du procédé selon l'invention.
[Fig 2]

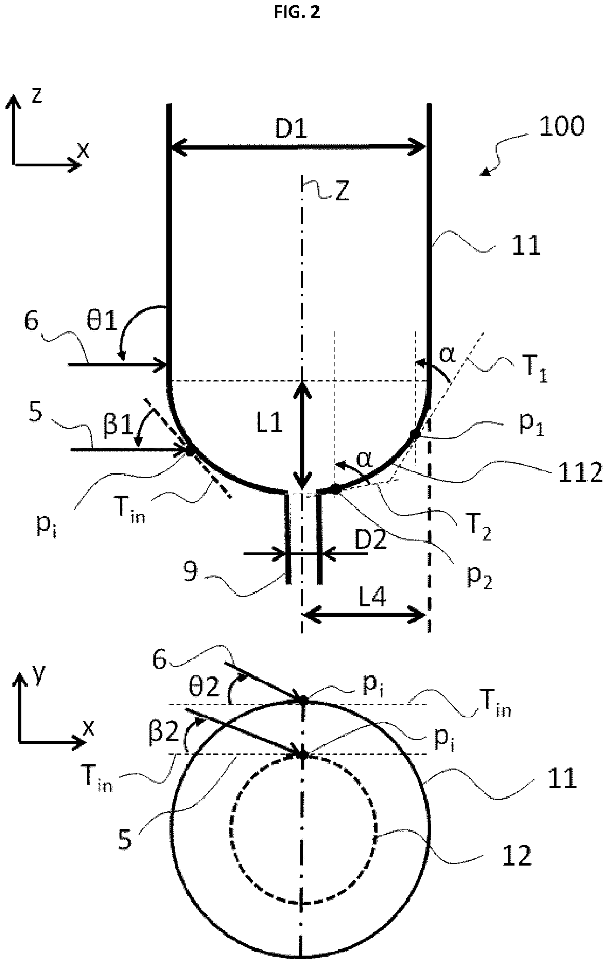

   La figure 2 illustre un exemple de mise en oeuvre des injections de liquide hydrocarboné recyclé et/ou d'appoint à l'intérieur des parties cylindrique et bombée du fond de l'enceinte 100 selon un premier mode de réalisation de l'enceinte.
[Fig 3]

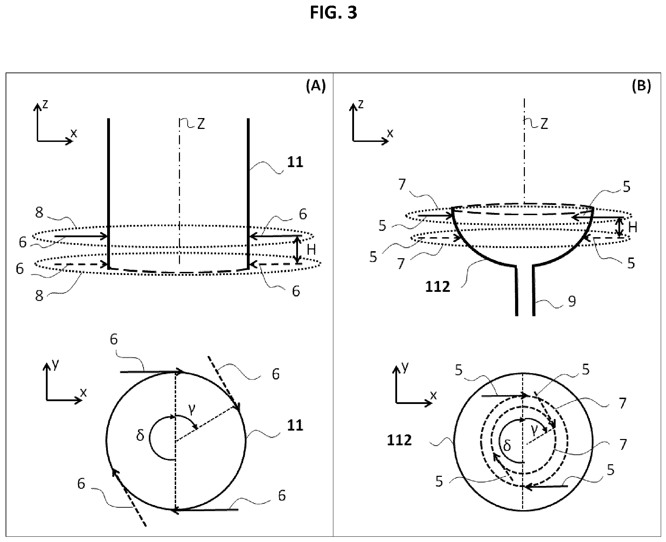

   La figure 3 illustre l'enceinte selon le mode de réalisation représenté à la figure 2 et un exemple de mise en oeuvre d'injections latérales multiples de liquide dans les parties cylindrique et bombée du fond de l'enceinte, selon une vue latérale et une vue de haut. (3A) : injections multiples 6 dans la partie cylindrique du fond de l'enceinte 1 ; (3B) : injections multiples 5 dans la partie bombée du fond de l'enceinte 100.
[Fig 4]

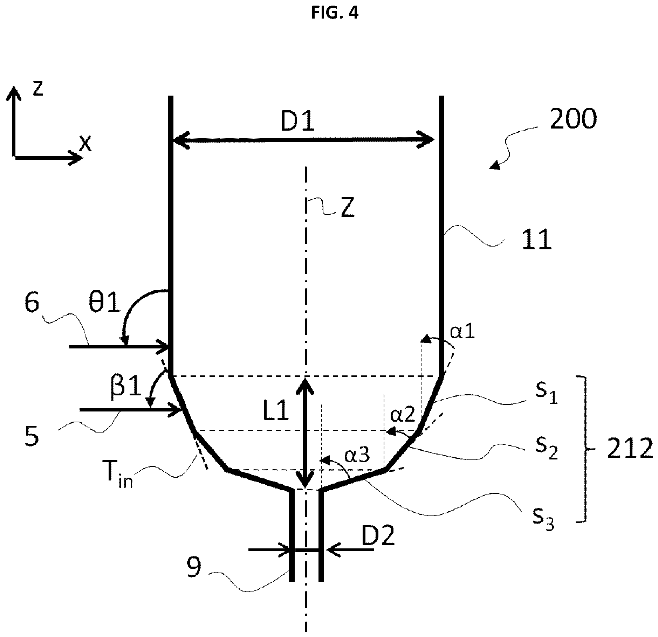

   La Figure 4 illustre un exemple de mise en oeuvre des injections de liquide hydrocarboné recyclé et/ou d'appoint à l'intérieur des parties supérieure cylindrique et inférieure à pluralité de portions tronconiques du fond de l'enceinte 200 selon un deuxième mode de réalisation.
[Fig 5]

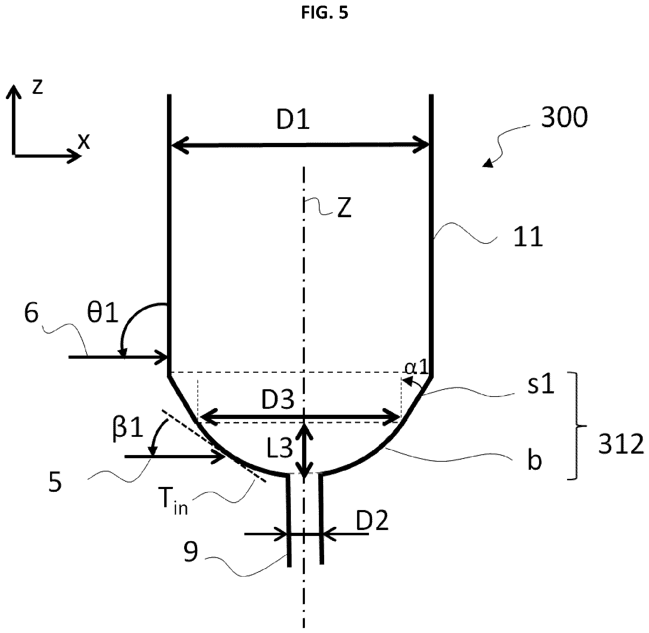

   La Figure 5 illustre un exemple de mise en oeuvre des injections de liquide hydrocarboné recyclé et/ou d'appoint à l'intérieur des parties supérieure cylindrique et inférieure à portions tronconique et bombée du fond de l'enceinte 300 selon un troisième mode de réalisation.
[Fig 6]

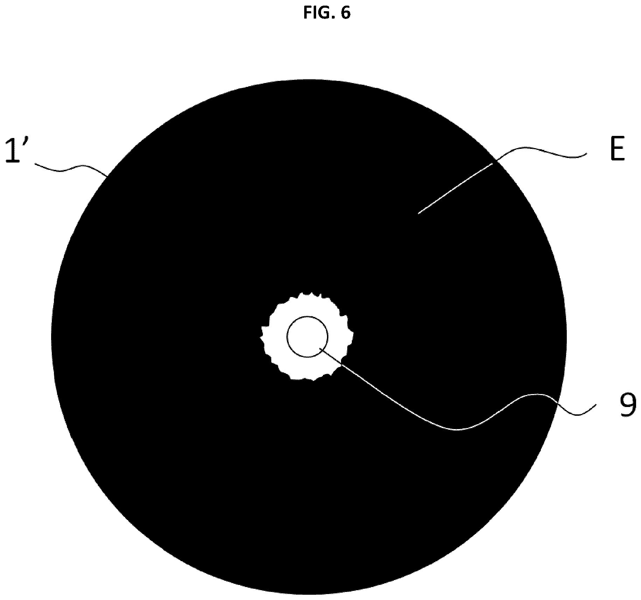

   La Figure 6 est une vue de dessus du fond d'un exemple d'enceinte 1' à fond bombé selon l'art antérieur sans injections, illustrant les zones stagnantes où les vitesses du liquide proches de la paroi sont inférieures à 10 cm/s, qui sont des zones potentielles d'accumulation de particules solides.
[Fig 7]

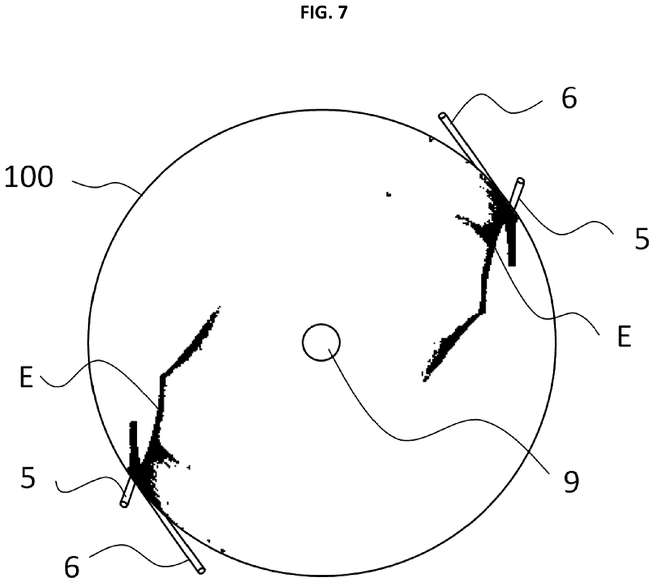

   La Figure 7 présente une vue du dessus d'un exemple d'enceinte 100 du procédé selon l'invention à fond bombé, avec des injections en fond d'enceinte, illustrant les zones stagnantes où les vitesses du liquide proches de la paroi sont inférieures à 10 cm/s, qui sont des zones potentielles d'accumulation de particules solides.

Sur les figures, les mêmes références désignent des éléments identiques ou analogues.

### Description des modes de réalisation

De manière générale, l'invention s'applique à toute enceinte d'un équipement dans laquelle circule un liquide avec possibilité de stagnation et accumulation de particules solides en fond d'enceinte. Plus spécifiquement, l'invention s'applique à toute enceinte dans laquelle circule un liquide hydrocarboné comportant des particules solides susceptibles de stagner et s'accumuler au fond de l'enceinte. Plus particulièrement, les injections sont situées dans la partie inférieure de l'enceinte, qui peut être par exemple l'enceinte d'une colonne de distillation atmosphérique ou sous vide, d'un ballon de séparation, d'un réacteur, d'un mélangeur, d'un décanteur, etc., utilisé dans un procédé produisant ou traitant des liquides susceptibles d'encrasser les enceintes. De préférence, l'enceinte du procédé selon l'invention est une enceinte de colonne de distillation atmosphérique ou sous vide, d'un ballon de séparation ou de tout autre moyen de séparation gaz/liquide permettant de traiter des charges hydrocarbonées.

Selon l'invention, l'enceinte s'adapte particulièrement à l'écoulement descendant d'un liquide contenant des particules solides hydrocarboné, et en particulier des hydrocarbures, qui comprend des particules solides susceptibles de stagner et s'accumuler au fond de l'enceinte. Par particules solides, on inclut également tout précipité qui pourrait se former dans le liquide.

Dans la suite du texte, on désigne par « injection » tout moyen connu de l'homme du métier permettant d'injecter du liquide depuis la paroi de l'enceinte vers l'intérieur, ledit moyen étant alimenté par au moins une conduite de transport de liquide. Ces moyens peuvent par exemple être des injections tubulaires avec un seul orifice, ou des injection tubulaires multi-orifices.

La Figure 1 présente le schéma de principe de l'invention. L'exemple de l'écoulement d'un liquide hydrocarboné est choisi pour la description qui suit de l'invention. Cependant la présente invention n'est pas limitée à une enceinte pour l'écoulement d'un liquide hydrocarboné, mais peut s'appliquer à une enceinte pour l'écoulement descendant de tout type de liquide encrassant, c'est-à-dire un liquide contenant des particules solides ou des composés susceptibles de précipiter, par exemple de floculer ou de s'adsorber à la paroi.

L'enceinte 1 du procédé selon l'invention comprend un fond comportant une partie supérieure cylindrique 11 et une partie inférieure à section décroissante et angle d'inclinaison α variable 12, typiquement un fond bombé, où un liquide hydrocarboné 2 encrassant s'écoule de manière descendante à partir du haut de l'enceinte et sort à travers une conduite de sortie 9.

Le fond de l'enceinte 1 comporte ainsi la partie supérieure cylindrique 11, la partie inférieure à section décroissante et d'angle d'inclinaison α variable 12 et la conduite de sortie 9.

Par section décroissante de ladite partie inférieure 12, on entend une section transversale, c'est-à-dire orthogonale par rapport l'axe Z (axe de révolution) de la partie supérieure cylindrique 11 (qui est confondu avec la verticale z), qui décroît dans le sens d'écoulement (descendant) du liquide hydrocarboné contenant des particules solides, c'est-à-dire en direction de la conduite de sortie 9. Par cylindre on entend un cylindre de révolution.

Par angle d'inclinaison α variable, on entend que l'angle α n'est pas constant sur toute la hauteur de la partie inférieure 12, ce qui exclut notamment une partie inférieure conique ou tronconique (formé par un seul cône). L'angle d'inclinaison α, illustré à la figure 2, et décrit plus loin, est l'angle formé entre la tangente en un point de la paroi de la partie inférieure 112 et un axe parallèle à l'axe Z passant par ce point.

Cette partie inférieure 12 peut être une partie bombée, connue par l'homme du métier en tant que « fond bombé » comme par exemple décrit dans les documents normatifs NF E 81-100, NF E 81-101 (fonds bombés à petit rayon de carré PRC - rayon de bombage supérieur ou égal au diamètre extérieur du fond et un rayon de carre compris entre 30 et 500 mm suivant les diamètres), NF E 81-102 (fonds bombés à grand rayon de carré GRC - rayon de bombage égal au diamètre extérieur du fond et un rayon de carre égal au dixième de ce même diamètre), NF E 81-103 (fonds bombés elliptiques), NF E 81-104 (fonds bombés à moyen rayon de carré MRC - rayon de bombage égal au diamètre extérieur du fond et un rayon de carre compris entre le trentième et le quinzième de ce même diamètre), ou être une partie comportant une portion bombée et au moins une portion tronconique, ou encore être une partie comportant une succession de portions tronconiques, comme décrit plus en détails ci-dessous en relation avec les figures 2 à 5. De telles formes sont bien connues de l'homme du métier pour faciliter le drainage des solides par gravité vers la conduite de sortie. En outre, de telles formes permettent des temps de séjour plus long du liquide hydrocarboné comparativement à des fonds coniques, pour un même rapport de diamètre entre la conduite de sortie et la partie supérieure cylindrique. Enfin, de tels fonds, en particulier les fonds bombés, sont bien adaptés aux équipement sous pression, l'épaisseur de métal requise étant moins importante que dans le cas de fonds coniques.

Les parties supérieure 11 et inférieure 12 sont dans la continuité l'une de l'autre, autrement dit elles sont successives, et la conduite de sortie 9 comporte une ouverture positionnée dans le fond de la partie inférieure.

Afin de réduire la formation des dépôts en paroi et dans le fond de l'enceinte, l'enceinte comprend des injections latérales de liquide recyclé et/ou d'appoint : injections 5 dans la partie inférieure à section décroissante et angle d'inclinaison variable 12 et injections 6 dans la partie cylindrique 11. Ces injections peuvent être réparties à la paroi selon des couches horizontales dans la partie inférieure 12 et selon des couches horizontales dans la partie cylindrique 11. Le flux liquide sortant est évacué de l'enceinte par une conduite d'évacuation 3.

Dans un mode de réalisation de l'invention, une conduite d'appoint de liquide 10 (qui peut être un liquide fluxant) alimente les injections latérales 5 et 6 situées dans la partie inférieure de section décroissante à angle variable 12 et dans la partie cylindrique 11, afin de réduire les zones stagnantes dans l'enceinte 1 et de limiter les dépôts de particules solides sur les parois. Dans le cas d'une enceinte pour un écoulement de liquide hydrocarboné, toute coupe de point d'ébullition supérieur ou égal au point d'ébullition du liquide hydrocarboné alimentant l'enceinte 1, par exemple un effluent de craquage catalytique comme une coupe lourde HCO (pour « Heavy Cycle Oil » en anglais) ou une coupe légère LCO (pour « Light Cycle Oil » en anglais) obtenues par craquage catalytique, ou toute autre coupe gazole sous vide VGO (« Vaccum Gas Oil » en anglais), résidu atmosphérique AR (pour « Atmosphérique residue »), résidu sous-vide VR (pour « Vaccum residue » en anglais), huile désasphaltée DAO (pour « De-Asphalted oil » en anglais), ou extrait aromatique peut convenir comme liquide d'appoint. Plus généralement, le liquide d'appoint est de préférence miscible avec le liquide 2. De préférence, le liquide d'appoint ne cause pas de précipitation d'espèces chimiques minoritaires qui sont dissoutes dans le liquide 2, ni de floculation, ni ne favorise des réactions chimiques de polymérisation pouvant conduire à des particules solides, ni n'a de point de bulle inférieur à la température de fonctionnement de l'enceinte. Selon ce mode de réalisation le débit de liquide sortant par la conduite d'évacuation 3 est égal à somme du débit de liquide hydrocarboné circulant dans l'enceinte 2 et du débit de liquide d'appoint injecté dans la conduite d'appoint 10. Le liquide d'appoint injecté à travers la conduite d'appoint 10 permet de réduire les zones stagnantes en générant une turbulence dans l'enceinte 1 afin de limiter les dépôts de particules solides sur les parois. Ledit liquide d'appoint injecté peut également jouer un rôle de fluxant lorsque le liquide choisi est une base aromatique.

Selon un autre mode de réalisation de l'invention, une partie du liquide hydrocarboné sortant de l'enceinte 1 peut être recyclée pour alimenter les injections latérales 5 et 6. Selon ce mode de réalisation le débit de liquide sortant par la conduite d'évacuation 3 est égal au débit du liquide 2. Le liquide recyclé à travers la conduite de recyclage 4 permet de réduire les zones stagnantes dans l'enceinte 1 en générant une turbulence ou un brassage afin de limiter les dépôts de particules solides sur les parois.

Selon encore un autre mode de réalisation de l'invention, le liquide injecté dans les injections latérales 5 et 6 peut provenir à la fois de la conduite de recyclage 4 et de la conduite d'appoint de liquide 10. Selon ce mode de réalisation, le débit de liquide sortant par la conduite d'évacuation 3 est égal à la somme du débit de liquide hydrocarboné circulant dans l'enceinte, dit liquide encrassant 2, et du débit de liquide d'appoint injecté dans la conduite d'appoint 10. Le liquide injecté à travers la conduite d'appoint 10 et à travers la conduite de recyclage 4 permet de réduire les zones stagnantes en générant une turbulence dans l'enceinte 1 afin de limiter les dépôts de particules solides sur les parois et peut également jouer le rôle de fluxant évoqué précédemment.

Le liquide injecté par les injections latérales 5 et 6 peut donc être du liquide recyclé depuis l'enceinte 1 et/ou du liquide d'appoint, c'est-à-dire un liquide provenant de l'extérieur de l'enceinte 1.

On définit le taux d'injection du liquide injecté par les injections latérales 5 et 6 comme étant le rapport entre la somme du débit de liquide dans la conduite de recyclage 4 et du débit de liquide dans la conduite d'appoint 10 sur le débit de liquide hydrocarboné circulant dans l'enceinte ou liquide encrassant 2.

La charge entrant dans l'enceinte peut contenir tout type de composés issus d'un effluent d'un procédé d'hydroconversion, par exemple issu d'une unité lit bouillonnant H-OIL ^{™}, mais également tout type de composés issus d'un procédé d'hydroconversion en lit entraîné, dit « slurry » en anglais, d'un procédé d'hydrotraitement en lit fixe, lit mobile, lit fluidisé, d'un effluent de craquage catalytique en lit fluidisé (FCC pour « Fluid Catalytic Cracking » en anglais), d'effluents des procédés de conversion thermique comme la cokéfaction (« coking » en anglais, la viscoréduction (« visbreaking » en anglais), et tout autre procédé de séparation comme par exemple le désasphaltage au solvant.

Les particules solides peuvent être des asphaltènes précipités, des fines de catalyseurs supportés ou non supportés (usuellement de diamètre inférieur à 500 microns) ou des particules de coke, des sulfures de métaux tels que nickel, vanadium, fer, molybdène.

L'écoulement dans l'enceinte se fait de manière descendante. Les injections de liquide peuvent être mises en oeuvre dans le fond d'une enceinte d'une colonne de distillation sous vide ou d'une colonne atmosphérique ou en fond de tout séparateur gaz-liquide.

Les figures 2 à 5 illustrent des exemples d'injections latérales dans différents modes de réalisation de l'enceinte du procédé selon l'invention. La partie inférieure à section décroissante et d'angle d'inclinaison variable 12 peut comprendre une portion bombée, de préférence de section elliptique, comme illustré aux figures 2, 3, et 5. Cette partie bombée peut s'étendre sur la totalité de la hauteur de la partie inférieure 12, comme montré en particulier aux figures 2, 3 et 6, ou seulement constituer une portion de ladite partie inférieure, comme par exemple illustré à la figure 5. La partie inférieure 12 peut alternativement comprendre, et de préférence être, une succession de portions tronconiques, de préférence d'angle d'inclinaison α croissant en direction de la conduite de sortie 9, tel qu'illustré à la figure 4.

La Figure 2 présente les différents types d'injections latérales de la partie recyclée du liquide ou du liquide d'appoint, dans une enceinte selon un premier mode de réalisation de l'invention, dans laquelle la partie inférieure du fond de l'enceinte 100 est un fond bombé 112.

L'enceinte 100, qui peut être par exemple celle d'une colonne de distillation ou d'un séparateur, possède un fond comportant une partie supérieure cylindrique 11 de diamètre D1, une partie inférieure bombée 112, une conduite de sortie 9 située en bas de l'enceinte, par laquelle le liquide hydrocarboné sort, de diamètre D2. La partie bombée 112 (aussi appelée fond bombé) a une section décroissante et un angle d'inclinaison α variable par rapport à l'axe de révolution Z, confondu avec la verticale (z) en position de fonctionnement de l'enceinte 100, de la partie cylindrique 11. L'angle d'inclinaison α est l'angle formé entre la tangente en un point de la paroi de la partie inférieure 112 et un axe parallèle à l'axe de révolution Z passant par ce point (la verticale). L'angle α varie de préférence entre 0° et 180°. L'angle α croît de préférence dans le sens d'écoulement (descendant) du liquide, soit en direction de la conduite de sortie 9. Ainsi, sur la figure 2, la valeur de l'angle α au point p₁, formé entre la tangente T₁ et la verticale, est différent de la valeur de l'angle α au point p₂ formé entre la tangente T₂ et la verticale, et est en l'occurrence plus petit. Le fond bombé peut être caractérisé par le rapport L1/D1, L1 étant la hauteur du fond bombé, et D1 étant le diamètre de la partie supérieure cylindrique 11, qui correspond au diamètre connu sous le nom « diamètre extérieur du fond » pour les fond bombés. Le fond bombé peut être d'un type décrit selon les normes référencées déjà citées plus haut, et notamment caractérisé par un rayon de bombage Ri et un rayon de carré Rc. De préférence, le fond bombé de l'enceinte 100 est un fond bombé elliptique (par exemple tel que défini dans le document normatif NF E 81-103). Ce peut être un fond hémisphérique (cas particulier d'un fond bombé elliptique, avec L1=D1/2).

Le rapport L1/D1 est compris entre 0,01 et 20, de préférence compris entre 0,02 et 10, et plus préférentiellement compris entre 0,1 et 5. Par exemple le rapport L1/D1 est égal à 4.

Deux types d'injection de liquide (d'appoint ou recyclé) sont définis :
- les injections 5 dans la partie inférieure à section décroissante et angle α variable 112, i.e. la partie bombée selon ce mode de réalisation, en fond de l'enceinte 100.
- les injections 6 dans la partie supérieure cylindrique 11 en fond de l'enceinte 100.

Les injections 5 situées dans la partie inférieure 112 sont inclinées par rapport à la tangente Tᵢₙ à la paroi de la partie inférieure 112 au point d'injection pᵢ d'un angle β1 dans le plan vertical (xz) et d'un angle β2 dans le plan horizontal (xy), x désignant l'axe horizontal, z désignant l'axe vertical, confondu avec l'axe de révolution Z de la partie supérieure cylindrique 11, et perpendiculaire au plan horizontal (xy). Comme illustré dans la figure 2, l'angle β1 est défini dans le sens inverse des aiguilles d'une montre (depuis la tangente à la paroi au point d'injection), et l'angle β2 est défini dans le sens des aiguilles d'une montre (depuis la tangente à la paroi au point d'injection).

Les injections 6 situées dans la partie supérieure cylindrique 11 sont inclinées par rapport à la paroi du corps cylindrique, confondue avec la tangente à la paroi de la partie supérieure 11 au point d'injection, d'un angle θ1 dans le plan vertical (xz) et d'un angle θ2 dans le plan horizontal (xy). Comme illustré dans la figure 2, l'angle θ1 est défini dans le sens inverse des aiguilles d'une montre (depuis la tangente à la paroi au point d'injection), et l'angle θ2 est défini dans le sens des aiguilles d'une montre (depuis a tangente à la paroi au point d'injection).

Les injections sont avantageusement orientées dans le même sens de rotation dans le plan horizontal (xy) et situées avantageusement dans la partie liquide du fond de colonne.

Les angles β1 et θ1, définis dans le plan (xz) par rapport à la tangente Tᵢₙ à la paroi respectivement de la partie inférieure 112 et de la partie supérieure 11, au point d'injection pᵢ, sont compris entre 5° et 175°, de préférence compris entre 10° et 150°, plus préférentiellement compris entre 15° et 120°, de manière plus préférée compris entre 15° et 90°, et de manière encore plus préférée entre 20° et 60°.

Les angles β2 et θ2, définis dans le plan (xy) par rapport à la tangente Tᵢₙ à la paroi respectivement de la partie inférieure 112 et de la partie supérieure 11, au point d'injection pᵢ, sont compris entre 0° et 180°, et de manière préférée entre 0° et 90°. De manière très préférée, les angles β2 et θ2 sont égaux à 0°, c'est-à-dire que l'injection est tangentielle à la paroi.

La Figure 3A présente la mise en oeuvre multiple d'injections 6 dans la partie cylindrique 11 du fond de l'enceinte 100. la Figure 3B présente la mise en oeuvre multiple d'injections 5 dans la partie inférieure de section décroissante et d'angle d'inclinaison α variable 112, i.e. la partie inférieure bombée selon ce mode de réalisation, du fond de l'enceinte 100.

La mise en place des injections à la paroi de l'enceinte est effectuée suivant des couches horizontales 8 dans le plan (xy) pour les injections 6 dans la partie supérieure cylindrique 11 et suivant des couches horizontales 7 pour les injections 5 dans la partie inférieure 112. Chaque couche d'injections 7 et 8, respectivement dans la partie inférieure 112 et dans la partie cylindrique 11, comprend respectivement un nombre N d'injections 5 ou 6 localisées à la même hauteur selon l'axe Z. Sur la Figure 3, N est égal à 2. Chaque couche est séparée par une hauteur H. A l'intérieur d'une couche, chaque injection est séparée de la suivante par un angle δ égal à 360/N dans le plan (xy). Comme montré sur la Figure 3, une couche d'injections peut être décalée par rapport à une autre couche d'injections d'un angle γ dans le plan (xy).

Le nombre de couches dans chacune des parties inférieure 112 ou supérieure cylindrique 11 est avantageusement compris entre 1 et 20, de préférence entre 1 et 10 et de manière préférée entre 1 et 6.

Le nombre d'injections N à la paroi de l'enceinte, dans chaque couche horizontale 8 dans la partie supérieure cylindrique 11 et dans chaque couche horizontale 7 dans la partie inférieure 112 est compris entre 1 et 30, de préférence entre 2 et 20, de manière très préférée entre 2 et 10, de manière plus préférée entre 2 et 6. Chaque couche, que ce soit au sein d'une même partie ou dans les deux parties, peut avoir un nombre d'injections N différent.

La hauteur H entre deux couches est avantageusement comprise entre 0,01 m et 10 m, de préférence entre 0,05 m et 5 m et de manière très préférée entre 0,1 m et 1 m.

L'angle δ séparant les injections dans la circonférence d'une même couche est compris entre 0° et 180°, de préférence compris entre 5° et 120°, de manière très préférée compris entre 10° et 90°. De manière avantageuse, l'angle δ est égal à 360/N où N désigne le nombre d'injections par couche.

L'angle γ désigne le décalage angulaire d'une couche par rapport à l'autre. Cet angle peut être compris entre 0° et 180°, de préférence compris entre 5° et 120°, de manière très préférée compris entre 10° et 90°.

La vitesse du liquide V injecté dans les conduites d'injections latérales 5 et 6 est comprise entre 0,05 m.s⁻¹ et 40 m.s⁻¹, de préférence entre 0,1 m.s⁻¹ et 30 m.s⁻¹ et de manière très préférée entre 0,5 m.s⁻¹ et 10 m.s⁻¹. De manière préférée, les diamètres des conduites d'injection sont dimensionnés en fonction du débit de liquide à injecter afin d'obtenir les vitesses d'injection souhaitées.

Le débit de liquide recyclé par la conduite de recyclage 4 plus le débit de liquide injecté par la conduite 10 sur le débit de liquide hydrocarboné 2 circulant dans l'enceinte 100 est avantageusement compris entre 1 % et 400 %, de préférence entre 5 % et 100 %, de manière très préférée entre 10 % et 60 % et de manière encore plus préférée entre 20 % et 50 %.

Le diamètre D1 de la partie supérieure cylindrique 11 du fond de l'enceinte 100 est avantageusement compris entre 0,1 m et 30 m, de préférence entre 0,5 m et 20 m, et de manière très préférée entre 1 m et 10 m.

Le rapport (D1/D2) entre le diamètre D1 de la partie supérieure cylindrique 11 et le diamètre D2 de la conduite de sortie 9 en fond de la partie inférieure de section décroissante et d'angle d'inclinaison α variable 12, est avantageusement compris entre 1,1 et 1000, de préférence compris entre 2 et 500 et de manière préférée compris entre 3 et 100.

La conduite de sortie 9 dans le fond de la partie inférieure peut être centrée par rapport à l'axe Z, ou peut être décalée, et est de préférence centrée. Le centre de la conduite de sortie 9 est situé à une distance L4 par rapport à la paroi de la partie supérieure cylindrique 11, cette distance L4 étant comprise entre D2/2 et D1/2, et de préférence égal à D1/2 (cas d'une conduite de sortie 9 centrée où le centre de la conduite est positionné sur l'axe Z).

La figure 4 illustre un exemple d'injections latérales de liquide recyclée et/ou du liquide d'appoint dans une enceinte selon un deuxième mode de réalisation de l'invention, dans laquelle la partie inférieure 212 du fond de l'enceinte 200 est un fond comportant une succession de portions tronconiques (s1, s2, s3). Ce mode de réalisation est en tout point identique au premier mode de réalisation, décrit en relation avec les figures 2 et 3, à l'exception de ladite partie inférieure du fond de l'enceinte 200. Selon ce deuxième mode de réalisation, la partie inférieure 212 est formée par une succession de portions tronconiques sₚ, d'angle d'inclinaison αₚ par rapport à la verticale (z). L'angle αₚ de deux portions tronconiques successives est différent. Pour chaque portion tronconique, le sommet du cône est dirigé vers le bas, c'est-à-dire dirigé vers la conduite de sortie 9, au fond de la partie inférieure 212. La section de la partie inférieure 212 est ainsi bien décroissante et d'angle d'inclinaison variable.

Bien que l'angle d'inclinaison αₚ d'une deuxième portion tronconique située directement sous une première portion tronconique, dans le sens de l'écoulement descendant du liquide dans l'enceinte, puisse être inférieur à celui de la première portion tronconique, l'angle d'inclinaison αp est de préférence croissant en direction de la conduite de sortie 9. Par exemple la partie inférieure est une succession de trois portions tronconiques d'angles d'inclinaison respectifs α1, α2 et α3 par rapport à la verticale z (ou l'axe de révolution Z) tel qu'illustré à la figure 4. L'angle de chaque portion tronconique est d'autant plus grand que la portion est proche du fond de la partie inférieure, c'est-à-dire qu'il est croissant dans le sens de l'écoulement descendant du liquide dans l'enceinte, autrement dit en direction de la conduite de sortie 9.

Le nombre de portions tronconiques Ns peut être compris entre 2 et 30, de préférence entre 2 et 10, et de manière préférée entre 2 et 5, et de manière encore plus préférée entre 3 et 5.

Lorsque Ns est suffisamment grand, par exemple supérieur à 10, la partie inférieure s'approche d'une configuration d'un fond bombé.

L'angle d'inclinaison αₚ d'une portion tronconique sₚ, l'indice p allant de 2 à Ns, est compris de manière avantageuse entre 5° et 70°, de préférence compris entre 15° et 60°, de manière très préférée compris entre 30° et 50°.

Les injections de liquide 5 et 6 sont réalisées comme déjà décrit pour le premier mode de réalisation de l'enceinte du procédé selon l'invention en relation avec les figures 2 et 3. En particulier, pour les injections 5 dans la partie inférieure 212, le point d'injection peut être situé en tout point de chaque portion tronconique. Excepté aux points de jonction entre les parties tronconiques, la tangente Tᵢₙ au point d'injection est confondue avec la paroi de la portion tronconique. Les angles des injections 5 sont toujours tels que l'injection est effectuée depuis la paroi de l'enceinte vers l'intérieur de l'enceinte. Ceci est vrai quel que soit le mode de réalisation de l'invention.

Selon ce deuxième mode de réalisation, les injections 5 sont de préférence réalisées selon au moins deux couches horizontales 7, positionnée chacune au niveau d'une portion tronconique différente.

La figure 5 illustre un exemple d'injections latérales de liquide recyclée du liquide et/ou du liquide d'appoint dans une enceinte selon un troisième mode de réalisation de l'invention, dans laquelle la partie inférieure 312 du fond de l'enceinte 300 est un fond comportant au moins une portion tronconique de sommet de cône dirigée vers le bas et au moins une portion bombée, ladite portion tronconique surmontant ladite portion bombée. De préférence, la partie inférieure 312 est formée par une seule portion bombée b comportant la conduite de sortie 9 et surmontée par une seule portion tronconique s₁, tel qu'illustré à la figure 5. Dans ce cas la portion tronconique s₁ a une angle d'inclinaison α1 par rapport à la verticale z (ou l'axe de révolution Z), qui peut être compris entre 5° et 70°, de préférence compris entre 15° et 60°, et de manière très préférée compris entre 30° et 50°. Alternativement, la portion bombée est surmontée par une succession de portions tronconiques similaire à celle décrite pour le troisième mode de réalisation de l'invention en relation avec la figure 4, sans nul besoin d'en reprendre la description ici.

La portion bombée b est de même type que celle décrite pour le premier mode de réalisation et sa description n'est également pas répétée ici, à l'exception que la hauteur L3 de la portion bombée b ne constitue pas toute la hauteur L1 de la partie inférieure 312 mais seulement une partie de celle-ci, l'autre partie étant celle constituée par la hauteur de la ou des portions tronconiques. La portion bombée b peut ainsi être caractérisée par le rapport L3/D3, D3 étant le plus petit diamètre de la portion tronconique s1 surmontant directement la portion bombée b, qui correspond au diamètre extérieur du fond selon la terminologie adoptée pour les fond bombés. Le rapport L3/D3 est avantageusement compris entre 0,01 et 10, de préférence compris entre 0,02 et 5, et plus préférentiellement compris entre 0,02 et 3.

Le rapport D1 sur D3 est avantageusement compris entre 0,05 et 0,9, de préférence compris entre 0,1 et 0,7 et manière préférée compris entre 0,2 et 0,6.

Les injections de liquide sont réalisées comme déjà décrit pour les premier et deuxième mode de réalisation de l'enceinte du procédé selon l'invention, en relation avec les figures 2 à 4. En particulier, pour les injections 5 dans la partie inférieure 312, le point d'injection peut être situé en tout point de la ou des portions tronconiques et de la portion bombée b. Excepté aux points de jonction entre les parties tronconiques s'il y en a plusieurs, la tangente Tᵢₙ au point d'injection est confondue avec la paroi de la portion tronconique.

Selon un quatrième mode de réalisation de l'invention, la partie inférieure du fond de l'enceinte comporte, et de préférence est, une portion bombée munie d'un insert plein formant une surface tronconique à l'intérieur de l'enceinte. L'insert est de préférence en matériau façonnable ou qui peut être coulé, par exemple dans un moule. De manière préférée, ce matériau est un béton réfractaire, avantageusement inerte vis-à-vis des produits chimiques présents dans l'enceinte. La surface tronconique interne de l'insert forme un angle d'inclinaison α' par rapport à l'axe Z (ou la verticale z), de préférence compris entre 5° et 85°, de préférence entre 10° et 70° et de manière préférée entre 20° et 45°. L'insert intègre au moins en partie les injections 5 situées dans la portion bombée de la partie inférieure, c'est-à-dire que les injections sont en partie ou en totalité contenues au sein de l'insert, enchâssées dans le matériau constituant l'insert.

La forme et les directions des injections peuvent ainsi être directement construites dans la pièce en matériau plein qui va constituer l'insert, ce qui rend leur implémentation mécanique plus facile.

Cet insert peut avantageusement être disposé lors de la fabrication de l'enceinte et en particulier du fond de l'enceinte, ou encore être mis en place dans le fond bombé d'une enceinte déjà existante.

L'invention s'applique aux procédés produisant des liquides susceptibles d'encrasser les enceintes, comme par exemple, sans être exhaustif, la viscoréduction, l'hydrocraquage en lit bouillonnant, le craquage catalytique, la cokéfaction retardée en raffinage de produits pétroliers ainsi que les procédés de liquéfaction de charbon et de traitement de biomasse. L'invention n'est en effet pas limitée aux domaines du raffinage du pétrole et de la production de carburants, mais peut s'appliquer plus généralement aux domaines de la pharmacie, de la chimie, de l'agroalimentaire, du traitement de minerais, dans tout procédé de transformation de la matière.

L'invention concerne ainsi un procédé de conversion de charges hydrocarbonées mettant en oeuvre l'enceinte telle que décrite ci-dessus.

Le procédé comprend de préférence une étape d'hydroconversion en lit bouillonnant pour des charges contenant des fractions d'hydrocarbures dont au moins 50 % poids ont une température d'ébullition supérieure à 300°C.

Par exemple cette étape est mise en oeuvre à l'aide de la technologie et dans les conditions du procédé H-Oil^{™} tel que décrit par exemple dans les brevets US4521295 ou US4495060 ou US4457831 ou dans l'article Aiche, March 19-23, 1995, Houston, Texas, paper number 46d, "Second génération ebullated bed technology".

### Exemples

Des simulations en mécanique des fluides numérique CFD (en anglais « Computational Fluid Dynamics ») d'un écoulement liquide dans une enceinte à fond bombé avec un ratio L1/D1 égal à 4 sans injections (comparatif) et dans la même enceinte à fond bombé avec des injections latérales de liquide recyclé selon l'invention ont été effectuées avec le logiciel Fluent. Ce logiciel utilise une approche Eulérienne pour la phase liquide.

Le tableau 1 présente les conditions simulées, ainsi que les caractéristiques et dimensions de l'enceinte du procédé selon l'invention incluant le nombre d'injections, le nombre de couches, et les angles d'injection, et de l'enceinte selon l'art antérieur sans injections.

**[Table 1]**

| **Dimensions enceintes** | |
|---|---|
| Diamètre D1 (m) | 1,2 |
| Diamètre D2 (m) | 0,15 |
| Longueur L1 (m) | 0,5 |
| Nombre de couches dans la partie supérieure cylindrique | 1 |
| Nombre de couches dans la partie inférieure hémisphérique | 1 |
| Nombre d'injections par couche | 2 |
| Angle β1 (injections 5) | 45° |
| Angle β2 (injections 5) | 0° |
| Angle θ1 (injections 6) | 90° |
| Angle θ2 (injections 6) | 0° |
| Distance L4 (m) | 0,6 |

| **Conditions opératoires** | |
|---|---|
| Masse volumique liquide hydrocarboné 2 (kg/m³) | 990 |
| Débit liquide hydrocarboné net 2 (kg/s) | 9,8 |
| Taux d'injection (débit du liquide recyclé dans la conduite 4 sur débit liquide hydrocarboné circulant 2) | 30% |

La Figure 6 (vue de haut de l'exemple de l'enceinte selon l'art antérieur) illustre pour la configuration sans injection (comparatif), les zones E de l'enceinte 1' où les vitesses du liquide proches de la paroi sont inférieures à 10 cm/s (en très sombre sur la figure). Ces zones représentent les zones dites « stagnantes » où une accumulation de particules solides peut avoir lieu. On peut voir sur cette figure l'emplacement en vue de haut de la conduite de sortie 9 au fond de la partie hémisphérique.

La Figure 7 (vue de haut de l'exemple de l'enceinte du procédé selon l'invention) illustre pour la configuration avec injections selon l'invention, les zones E de l'enceinte 100 où les vitesses du liquide proches de la paroi sont inférieures à 10 cm/s. On peut voir sur cette figure l'emplacement en vue de haut des injections 5 et 6, ainsi que celui de la conduite de sortie 9 au fond de la partie hémisphérique.

En comparant les figures 6 et 7, on observe la diminution drastique des zones potentielles d'accumulation de solide grâce à la mise en place des injections latérales de liquide avec l'enceinte du procédé selon l'invention.

Un critère de zone stagnante « Crit » peut être défini comme étant le rapport entre la surface où la vitesse liquide proche de la paroi du fond de colonne est inférieur à 10 cm/s et la surface du fond de la colonne.

Le tableau 2 ci-dessous indique la valeur du critère de zone stagnante Crit pour la configuration sans et avec injections :

**[Table 2]**

| **Critère zone stagnante « *Crit* »** | |
|---|---|
| Configuration sans injections | 97% |
| Configuration avec injections | 12% |

Ainsi, par un calcul du critère de zone stagnante Crit, il apparaît que dans la configuration selon l'invention, avec un recyclage de 30% du liquide hydrocarboné pour alimenter deux injections 5 en partie inférieure hémisphérique et deux injections 6 en partie supérieure cylindrique avec une géométrie conforme à l'invention, les zones stagnantes sont réduites de 85%.

## Revendications

1. Procédé de conversion de charges hydrocarbonées mettant en oeuvre une enceinte (1, 100, 200, 300) pour l'écoulement descendant d'un liquide hydrocarboné contenant des particules solides, comportant :
- un fond comprenant une partie supérieure cylindrique (11) de diamètre D1, une partie inférieure à section décroissante et d'angle d'inclinaison α variable (112, 212, 312) par rapport à l'axe de révolution (Z) de ladite partie supérieure cylindrique, l'angle α n'étant pas constant sur toute la hauteur de la partie inférieure (112, 212, 312), excluant une partie inférieure conique ou tronconique, et une conduite de sortie (9) de diamètre D2 par laquelle le liquide hydrocarboné sort et comportant une ouverture positionnée dans le fond de ladite partie inférieure,
ladite partie inférieure (112) étant une portion bombée, de préférence de section elliptique, s'étendant sur toute la hauteur de ladite partie inférieure, ladite portion bombée étant de hauteur L1 et ayant un rapport L1/D1 compris entre 0,01 et 20, ou
ladite partie inférieure (312) est formée par une seule portion bombée (b) comportant ladite conduite de sortie (9) et surmontée par une seule portion tronconique (s1), ou
ladite partie inférieure est formée par une seule portion bombée (b) comportant ladite conduite de sortie (9) et surmontée par une succession de portions tronconique, ou
ladite partie inférieure (212) est une succession de portions tronconiques (s1, s2, s3),
- au moins une injection (5) de liquide recyclé et/ou d'appoint dans ladite partie inférieure à section décroissante et d'angle d'inclinaison variable (112, 212, 312);
- au moins une injection (6) de liquide recyclé et/ou d'appoint dans ladite partie supérieure cylindrique (11);
la ou lesdites injections (5) situées dans ladite partie inférieure (112, 212, 312) étant inclinées par rapport à la tangente (Tᵢₙ) à la paroi de la partie inférieure au point d'injection d'un angle β1 dans le plan vertical (xz) et d'un angle β2 dans le plan horizontal (xy) ; la ou lesdites injections (6) situées dans ladite partie supérieure cylindrique étant inclinées par rapport à la paroi de la partie supérieure cylindrique d'un angle θ1 dans le plan vertical (xz) et d'un angle θ2 dans le plan horizontal (xy), les angles β1 et θ1 étant compris entre 5° et 175°, les angles β2 et θ2 étant compris entre 0° et 180°, et
dans lequel la vitesse du liquide V injecté dans lesdites injections est comprise entre 0,05 m.s⁻¹ et 40 m.s⁻¹.

2. Procédé mettant en oeuvre une enceinte selon la revendication 1, dans laquelle ladite partie inférieure à section décroissante et d'angle d'inclinaison variable (112) est une portion bombée de hauteur L1 ayant un rapport L1/D1 compris entre 0,02 et 10 et plus préférentiellement compris entre 0,1 et 5.

3. Procédé mettant en oeuvre une enceinte selon la revendication 1, dans laquelle ladite partie inférieure à section décroissante et d'angle d'inclinaison variable (312) est formée par une seule portion bombée (b) comportant ladite conduite de sortie (9) et surmontée par une seule portion tronconique (s1), et dans laquelle le rapport D1/D3 est compris entre 0,05 et 0,9, D3 étant le plus petit diamètre de ladite portion tronconique (S1) surmontant ladite portion bombée (b), et dans laquelle le rapport L3/D3 est compris entre 0,01 et 10, L3 étant la hauteur de ladite portion bombée (b).

4. Procédé mettant en oeuvre une enceinte selon l'une des revendications 1 à 3, dans laquelle ladite portion bombée comporte un insert plein formant une surface interne tronconique d'angle d'inclinaison α', de préférence compris entre 5° et 85°, ledit insert intégrant au moins en partie les injections (5) situées dans ladite portion bombée de ladite partie inférieure.

5. Procédé mettant en oeuvre une enceinte selon la revendication 1, dans laquelle ladite partie inférieure à section décroissante et d'angle d'inclinaison variable (212) est une succession de portions tronconiques (s1, s2, s3), chacune desdites portions tronconiques ayant de préférence un angle d'inclinaison α croissant (α1, α2, α3) en direction de la conduite de sortie (9).

6. Procédé mettant en oeuvre une enceinte selon l'une des revendications précédentes, dans laquelle lesdites injections sont réparties par couches horizontales (7) dans la partie inférieure (112, 212, 312) et par couches horizontales (8) dans la partie supérieure cylindrique (11) respectivement.

7. Procédé mettant en oeuvre une enceinte selon l'une des revendications précédentes, dans laquelle les angles β1 et θ1 sont compris entre 10° et 150°, de manière très préférée entre 15° et 120°, de manière plus préférée entre 15° et 90° et de manière encore plus préférée entre 20° et 60°.

8. Procédé mettant en oeuvre une enceinte selon l'une des revendications précédentes, dans laquelle les angles β2 et θ2 sont compris entre 0° et 90°, et de préférence sont égaux à 0°.

9. Procédé mettant en oeuvre une enceinte selon l'une des revendications 6 à 8, dans laquelle le nombre d'injections N par couche est compris entre 1 et 30, de préférence compris entre 2 et 10, et plus préférentiellement compris entre 2 et 6.

10. Procédé mettant en oeuvre une enceinte selon la revendication 9, dans laquelle lesdites injections au sein d'une même couche sont espacées d'un angle δ égal à 360/N.

11. Procédé selon l'une des revendications précédentes, mettant en oeuvre une étape d'hydroconversion en lit bouillonnant pour des charges contenant des fractions d'hydrocarbures dont au moins 50 % poids ont une température d'ébullition supérieure à 300°C.

12. Procédé selon l'une des revendications précédentes, dans lequel la vitesse du liquide V injecté dans lesdites injections est comprise entre 0,1 m.s⁻¹ et 30 m.s⁻¹ et de manière très préférée entre 0,5 m.s⁻¹ et 10 m.s⁻¹.

13. Procédé selon l'une des revendications précédentes, dans lequel le taux d'injection de liquide recyclé et/ou d'appoint par rapport au liquide hydrocarboné circulant dans l'enceinte est compris entre 1 % et 400 %, de préférence entre 5 % et 100 %, de manière très préférée entre 10 % et 60 % et de manière encore plus préférée entre 20 % et 50 %.

## Patentansprüche

1. Verfahren zur Umwandlung von kohlenwasserstoffhaltigen Chargen, das eine Kammer (1, 100, 200, 300) zum Abwärtsströmen einer feste Partikel enthaltenden kohlenwasserstoffhaltigen Flüssigkeit einsetzt, aufweisend:
- einen Boden, umfassend einen zylindrischen oberen Teil (11) mit dem Durchmesser D1, einen unteren Teil mit abnehmendem Querschnitt und in Bezug auf die Rotationsachse (Z) des zylindrischen oberen Teils variablem Neigungswinkel α (112, 212, 312), wobei der Winkel α nicht über die gesamte Höhe des unteren Teils (112, 212, 312) konstant ist, unter Ausschluss eines konischen oder kegelstumpfförmigen unteren Teils, und eine Auslassleitung (9) mit dem Durchmesser D2, durch welche die kohlenwasserstoffhaltige Flüssigkeit austritt und die eine in dem Boden des unteren Teils positionierte Öffnung aufweist,
wobei der untere Teil (112) ein gewölbter Abschnitt ist, bevorzugt mit elliptischem Querschnitt, der sich über die gesamte Höhe des unteren Teils erstreckt, wobei der gewölbte Abschnitt die Höhe L1 hat und ein Verhältnis L1/D1 zwischen 0,01 und 20 hat, oder
der untere Teil (312) durch einen einzigen gewölbten Abschnitt (b) gebildet wird, der die Auslassleitung (9) aufweist und über dem ein einziger kegelstumpfförmiger Abschnitt (s1) liegt, oder
der untere Teil durch einen einzigen gewölbten Abschnitt (b) gebildet wird, der die Auslassleitung (9) aufweist und über dem eine Abfolge von kegelstumpfförmigen Abschnitten liegt, oder
der untere Teil (212) eine Abfolge von kegelstumpfförmigen Abschnitten (s1, s2, s3) ist,
- mindestens eine Einspritzung (5) von rückgeführter und/oder Nachspeiseflüssigkeit in den unteren Teil mit abnehmendem Querschnitt und variablem Neigungswinkel (112, 212, 312);
- mindestens eine Einspritzung (6) von rückgeführter und/oder Nachspeiseflüssigkeit in den zylindrischen oberen Teil (11);
wobei die Einspritzung oder Einspritzungen (5), die in dem unteren Teil (112, 212, 312) gelegen sind, in Bezug auf die Tangente (Tᵢₙ) an der Wand des unteren Teils im Einspritzpunkt um einen Winkel β1 in der vertikalen Ebene (xz) und um einen Winkel β2 in der horizontalen Ebene (xy) geneigt sind, wobei die Einspritzung oder Einspritzungen (6), die in dem zylindrischen oberen Teil gelegen sind, in Bezug auf die Wand des zylindrischen oberen Teils um einen Winkel θ1 in der vertikalen Ebene (xz) und um einen Winkel θ2 in der horizontalen Ebene (xy) geneigt sind, wobei die Winkel β1 und θ1 zwischen 5° und 175° betragen, wobei die Winkel β2 und θ2 zwischen 0° und 180° betragen, und
wobei die Geschwindigkeit der in den Einspritzungen eingespritzten Flüssigkeit V zwischen 0,05 m.s⁻¹ und 40 m.s⁻¹ beträgt.

2. Verfahren unter Verwendung eine Kammer nach Anspruch 1, wobei der untere Teil mit abnehmendem Querschnitt und variablem Neigungswinkel (112) ein gewölbter Abschnitt mit der Höhe L1 ist, der ein Verhältnis L1/D1 zwischen 0,02 und 10 und bevorzugter zwischen 0,1 und 5 hat.

3. Verfahren unter Verwendung eine Kammer nach Anspruch 1, wobei der untere Teil mit abnehmendem Querschnitt und variablem Neigungswinkel (312) durch einen einzigen gewölbten Abschnitt (b) gebildet wird, der die Auslassleitung (9) aufweist und über dem ein einziger kegelstumpfförmiger Abschnitt (s1) liegt, und wobei das Verhältnis D1/D3 zwischen 0,05 und 0,9 beträgt, wobei D3 der kleinste Durchmesser des kegelstumpfförmigen Abschnitts (S1) ist, der über dem gewölbten Abschnitt (b) liegt, und wobei das Verhältnis L3/D3 zwischen 0,01 und 10 beträgt, wobei L3 die Höhe des gewölbten Abschnitts (b) ist.

4. Verfahren unter Verwendung eine Kammer nach einem der Ansprüche 1 bis 3, wobei der gewölbte Abschnitt einen vollwandigen Einsatz aufweist, der eine kegelstumpfförmige Innenfläche mit dem Neigungswinkel α' von bevorzugt zwischen 5° und 85° bildet, wobei der Einsatz mindestens teilweise die Einspritzungen (5) beinhaltet, die in dem gewölbten Abschnitt des unteren Teils gelegen sind.

5. Verfahren unter Verwendung eine Kammer nach Anspruch 1, wobei der untere Teil mit abnehmendem Querschnitt und variablem Neigungswinkel (212) eine Abfolge von kegelstumpfförmigen Abschnitten (s1, s2, s3) ist, wobei jeder der kegelstumpfförmigen Abschnitte bevorzugt einen in Richtung der Auslassleitung (9) zunehmenden Neigungswinkel α (α1, α2, α3) hat.

6. Verfahren unter Verwendung eine Kammer nach einem der vorhergehenden Ansprüche, wobei die Einspritzungen in dem unteren Teil (112, 212, 312) in horizontalen Schichten (7) und in dem zylindrischen oberen Teil (11) in horizontalen Schichten (8) verteilt sind.

7. Verfahren unter Verwendung eine Kammer nach einem der vorhergehenden Ansprüche, wobei die Winkel β1 et θ1 zwischen 10° und 150°, bevorzugt zwischen 15° und 120°, noch bevorzugter zwischen 15° und 90° und besonders bevorzugt zwischen 20° und 60° betragen.

8. Verfahren unter Verwendung eine Kammer nach einem der vorhergehenden Ansprüche, wobei die Winkel β2 et θ2 zwischen 0° und 90° betragen und bevorzugt gleich 0° sind.

9. Verfahren unter Verwendung eine Kammer nach einem der Ansprüche 6 bis 8, wobei die Anzahl von Einspritzungen N je Schicht zwischen 1 und 30, bevorzugt zwischen 2 und 10 und noch bevorzugter zwischen 2 und 6 beträgt.

10. Verfahren unter Verwendung eine Kammer nach Anspruch 9, wobei die Einspritzungen innerhalb einer selben Schicht um einen Winkel δ gleich 360/N beabstandet sind.

11. Verfahren unter Verwendung eine Kammer nach einem der vorhergehenden Ansprüche, das einen Schritt der Hydrokonversion im Siedebett für Chargen einsetzt, die Kohlenwasserstofffraktionen enthalten, von denen mindestens 50 Gew.-% eine Siedetemperatur von mehr als 300 °C haben.

12. Verfahren unter Verwendung eine Kammer nach einem der vorhergehenden Ansprüche, wobei die Geschwindigkeit der in den Einspritzungen eingespritzten Flüssigkeit V zwischen 0,1 m.s⁻¹ und 30 m.s⁻¹ und besonders bevorzugt zwischen 0,5 m.s⁻¹ und 10 m.s⁻¹ beträgt.

13. Verfahren unter Verwendung eine Kammer nach einem der vorhergehenden Ansprüche, wobei der Anteil der Einspritzung von rückgeführter und/oder Nachspeiseflüssigkeit in Bezug auf die in der Kammer zirkulierende kohlenwasserstoffhaltige Flüssigkeit zwischen 1 % und 400 %, bevorzugt zwischen 5 % und 100 %, noch bevorzugter zwischen 10 % und 60 % und besonders bevorzugt zwischen 20 % und 50 % beträgt.

## Claims

1. Method for the conversion of hydrocarbon feedstocks using a vessel (1, 100, 200, 300) for the downflow of a hydrocarbon liquid containing solid particles, comprising:
- a bottom comprising a cylindrical upper part (11) of diameter D1, a lower part (112, 212, 312) of decreasing cross section and variable angle of inclination α with respect to the axis of revolution (Z) of the said cylindrical upper part, the angle α not being constant over the entire height of the lower part (112, 212, 312), excluding a conical or frustaconical lower part, and an outlet pipe (9) of diameter D2 by means of which the hydrocarbon liquid leaves, and comprising an opening positioned in the bottom of the said lower part, the said lower part (112) being a convex portion, preferably of elliptical cross section, extending over the entire height of the said lower part, the said convex portion being of height L1 and having a ratio L1/D1 comprised between 0.01 and 20, or said lower part (312) is formed by a single convex portion (b), comprising said outlet pipe (9) and surmounted by a single frustaconical portion (s1), or said lower part is formed by a single convex portion (b) comprising said outlet pipe (9) and surmounted by a succession of frustaconical portions, or said lower part (212) is a succession of frustaconical portions (s1, s2, s3),
- at least one injection (5) of recirculated and/or makeup liquid into the said lower part (112, 212, 312) of decreasing cross section and variable angle of inclination;
- at least one injection (6) of recirculated and/or makeup liquid into the said cylindrical upper part (11);
the said injection(s) (5) situated in the said lower part (112, 212, 312) being inclined with respect to the tangent (Tᵢₙ) to the wall of the lower part at the injection point by an angle β1 in the vertical plane (xz) and by an angle β2 in the horizontal plane (xy); the said injection(s) (6) situated in the said cylindrical upper part being inclined with respect to the wall of the cylindrical upper part by an angle θ1 in the vertical plane (xz) and by an angle θ2 in the horizontal plane (xy), the angles β1 and θ1 being comprised between 5° and 175°, the angles β2 and θ2 being comprised between 0° and 180°, and wherein the velocity V of the liquid injected in the said injections is comprised between 0.05 m.s⁻¹ and 40 m.s⁻¹.

2. Method using a vessel according to Claim 1, wherein said lower part (112) with decreasing cross section and variable angle of inclination is a convex portion of height L1 having a ratio L1/D1 comprised between 0.02 and 10 and more preferably comprised between 0.1 and 5.

3. Method using a vessel according to Claim 1, wherein the lower part (312) of decreasing cross section and variable angle of inclination is formed of a single convex portion (b) comprising said outlet pipe (9) and surmounted by a single frustaconical portion (s1), and wherein the ratio D1/D3 is comprised between 0.05 and 0.9, D3 being the smallest diameter of the said frustoconical portion (S1) surmounting the said convex portion (b), and wherein the ratio L3/D3 is comprised between 0.01 and 10, L3 being the height of the said convex portion (b).

4. Method using a vessel according to one of Claims 1 to 3, wherein the said convex portion comprises a solid insert forming a frustoconical internal surface of angle of inclination α', preferably comprised between 5° and 85°, the said insert at least partially incorporating the injections (5) situated in the said convex portion of the said lower part.

5. Method using a vessel according to Claim 1, wherein the said lower part (212) with decreasing cross section and variable angle of inclination comprises a succession of frustoconical portions (s1, s2, s3), each one of the said frustoconical portions preferably having an angle of inclination α (α1, α2, α3) that increases in the direction of the outlet pipe (9).

6. Method using a vessel according to one of the preceding claims, wherein the said injections are distributed in horizontal layers (7) in the lower part (112, 212, 312) and in horizontal layers (8) in the cylindrical upper part (11), respectively.

7. Method using a vessel according to one of the preceding claims, wherein the angles β1 and θ1 are comprised between 10° and 150°, highly preferably between 15° and 120°, more preferably between 15° and 90°, and more preferably still between 20° and 60°.

8. Method using a vessel according to one of the preceding claims, wherein the angles β2 and θ2 are comprised between 0° and 90°, and are preferably equal to 0°.

9. Method using a vessel according to one of Claims 6 to 8, wherein the number of injections N per layer is comprised between 1 and 30, preferably comprised between 2 and 10, and more preferentially comprised between 2 and 6.

10. Method according to Claim 9, wherein the said injections into one and the same layer are spaced by an angle δ equal to 360/N.

11. Method using a vessel according to one of the preceding claims, employing an ebullated-bed hydroconversion step for feedstocks containing hydrocarbon fractions of which at least 50 wt% have a boiling point above 300°C.

12. Method using a vessel according to one of the preceding claims, wherein the velocity V of the liquid injected in the said injections is comprised between 0.1 m.s⁻¹ and 30 m.s⁻¹ and highly preferably between 0.5 m.s⁻¹ and 10 m.s⁻¹.

13. Method using a vessel waccording to one of the preceding claims, wherein the level of recirculated and/or of makeup liquid injected with respect to the hydrocarbon liquid circulating through the vessel is comprised between 1% and 400%, preferably between 5% and 100%, highly preferably between 10% and 60%, and more preferably still between 20 and 50%.
